# EUROPEAN PATENT SPECIFICATION

(11) **EP 4 491 522 B1**
(45) Date of publication and mention of the grant of the patent: **06.05.2026**
(21) Application number: 22930914.1
(22) Date of filing: 11.03.2022
(51) Int. Cl.: B64G 1/22

(54) **EXTENSION BOOM, SOLAR PADDLE, AND METHOD FOR MANUFACTURING EXTENSION BOOM**
VERLÄNGERUNGSAUSLEGER, SOLARPADDEL UND VERFAHREN ZUR HERSTELLUNG EINES VERLÄNGERUNGSAUSLEGERS
FLÈCHE D'EXTENSION, PANNEAU SOLAIRE ORIENTABLE ET PROCÉDÉ DE FABRICATION DE FLÈCHE D'EXTENSION

(43) Date of publication of application: 15.01.2025
(73) Proprietor: MITSUBISHI ELECTRIC CORPORATION, Chiyoda-ku Tokyo 100-8310 (JP)
(72) Inventor: KOYAMA, Tatsuya, Tokyo 100-8310 (JP); KOBAYASHI, Hiroki, Tokyo 100-8310 (JP); TAKAGAKI, Kazunori, Tokyo 100-8310 (JP)
(74) Representative: Meissner Bolte Partnerschaft mbB
(86) International application number: PCT/JP2022/010931
(87) International publication number: WO 2023/170933

(56) References cited:
- WO-A1-03/062565
- JP-A- 2018 001 601
- JP-A- 2018 001 601
- JP-A- 2021 066 188
- JP-B1- 7 012 908
- JP-B2- 6 525 272
- US-A1- 2015 144 740
- US-A1- 2016 226 126
- US-B1- 6 343 442

## Description

### Technical Field

The present invention relates to an extensible boom, a solar cell paddle, and an extensible boom manufacturing method.

### Background Art

To keep up with increasing power consumption on artificial satellites, upsizing of photovoltaic power generation panels is desired. For accommodating upsizing of photovoltaic power generation panels, a scheme of retracting a photovoltaic power generation panel in a cylindrical shape has been developed as a scheme of a retracting photovoltaic power generation panels.

In the scheme, the photovoltaic power generation panel is deployed by extending a mast. The scheme also provides high efficiency in retraction of photovoltaic power generation panels, compared with a conventional scheme of retracting a photovoltaic power generation panel by alternately folding the photovoltaic power generation panel.

In the scheme of retracting a photovoltaic power generation panel in a cylindrical shape, an extensible boom using a member with bidirectional stability is used as a mast. Here, the member with bidirectional stability is a member that can maintain each of a shape at the time of retraction and a shape at the time of extension even without external force. An extensible boom assumes a cylindrical shape when it is retracted and becomes a mast when it is extended.

Also, when the extensible boom is deformed, an extending force is generated, which is a force for deploying a solar cell paddle. In the extensible boom, as the size is larger and as the thickness is larger, the extending force becomes larger. However, a large size and a large thickness make the weight of the extensible boom heavy. Thus, in the extensible boom, a technique has been desired to obtain a necessary extending force while reducing an increase in weight. Further prior art related to the invention is given in Patent Literature 2 to 6

### Citation List

### Patent Literature

Patent Literature 1: JP 6 525 272 B2
Patent Literature 2 : US 2016/226126
Patent Literature 3 : WO 03/062565
Patent Literature 4 : JP 2021 066188
Patent Literature 5 : JP 2018 001601
Patent Literature 6 : JP 7 012908

### Summary of Invention

### Technical Problem

In the technology disclosed in Patent Literature 1, an improvement in extending force is achieved by assisting the extensible boom by using a metal-made plate material. However, an increase in weight of the extensible boom poses a problem. Also, in the technology, fabric with orthogonal fibers is used as a material configuring the extensible boom. However, to improve the extending force by utilizing fiber orientation, the fiber angle is limited in normal fabric, and therefore it is required to improve the extending force by laminating unidirectional materials.

Here, when unidirectional materials are laminated for the technology, the weight increases because it is required to ensure many number of laminations to ensure symmetry of lamination. In addition, if an improvement in the extending force with fiber orientation is simply sought, the shape in a retracted state becomes unstable. Thus, the technology has a problem in which stability in a retracted state decreases.

Patent Literature 2 discloses - according to its abstract - an antenna assembly which comprises an extendible mast constructed and arranged so as to be configurable between a coiled form and an extended form. The extended mast is resiliently biased in the form of an elongate tube having a slit along its length. The coiled mast is wound about an axis extending transversely to the longitudinal extent of the mast. An antenna is integrally coupled to the mast such that when extended, the mast supports and positions the antenna, and when coiled, the mast and antenna are coiled together.

An object of the present invention is to provide an extensible boom in which a relatively high extending force can be obtained without an increase in weight and stability in a retracted state is relatively high.

### Solution to the Problem

An extensible boom according to the present invention is given in claim 1 and is an extensible boom to be extended from a retracted state of being rolled in a cylindrical form, wherein
the extensible boom is made of a fiber-reinforced composite material,
when the extended extensible boom is deployed,
   in a first area, directions of fiber contained in the fiber-reinforced composite material are a first low-angle direction forming a negative angle to a clockwise direction with respect to an extending direction of the extensible boom and a second low-angle direction forming a positive angle to the clockwise direction with respect to the extending direction,
   in a second area a position of which in the extending direction is different from a position of the first area in the extending direction, directions of fiber contained in the fiber-reinforced composite material are a first high-angle direction forming a negative angle to a clockwise direction with respect to the extending direction and a second high-angle direction forming a positive angle to the clockwise direction with respect to the extending direction,
the first low-angle direction is closer to the extending direction than the first high-angle direction, and
the second low-angle direction is closer to the extending direction than the second high-angle direction. A manufacturing method of the invention is given in claim 9.

### Advantageous Effects of the Invention

With the direction of fiber in the first area of the extensible boom made of the fiber-reinforced composite material being made relatively closer to the extending direction than the direction of fiber in the second area of the extensible boom, the extending force of the extensible boom is enhanced without the use of a metal-made plate material or the like.

Also, with the direction of fiber in the second area of the extensible boom being made relatively away from the extending direction than the direction of fiber in the first area of the extensible boom, stability of the extensible boom in the retracted state is enhanced. Therefore, according to the present invention, it is possible to provide an extensible boom in which a relatively high extending force can be obtained without an increase in weight and stability in the retracted state is relatively high.

### Brief Description of Drawings

FIG. 1 is a schematic diagram of a solar cell paddle 100 according to Embodiment 1.
FIG. 2 is a diagram for describing an extended state of an extensible boom 120 according to Embodiment 1.
FIG. 3 is a diagram for describing a fiber orientation 123 and a fiber orientation 124 according to Embodiment 1.
FIG. 4 is a diagram for describing an extensible boom manufacturing method according to Embodiment 1.
FIG. 5 is a diagram for describing an extended state of an extensible boom 120 according to Embodiment 2.

### Description of Embodiments

In the description of embodiments and drawings, the same elements and corresponding elements are given the same reference numerals. Description on elements with the same reference numeral is simplified or omitted as appropriate.

### Embodiment 1.

The present embodiment is described in detail below with reference to the drawings.

### Description of structure

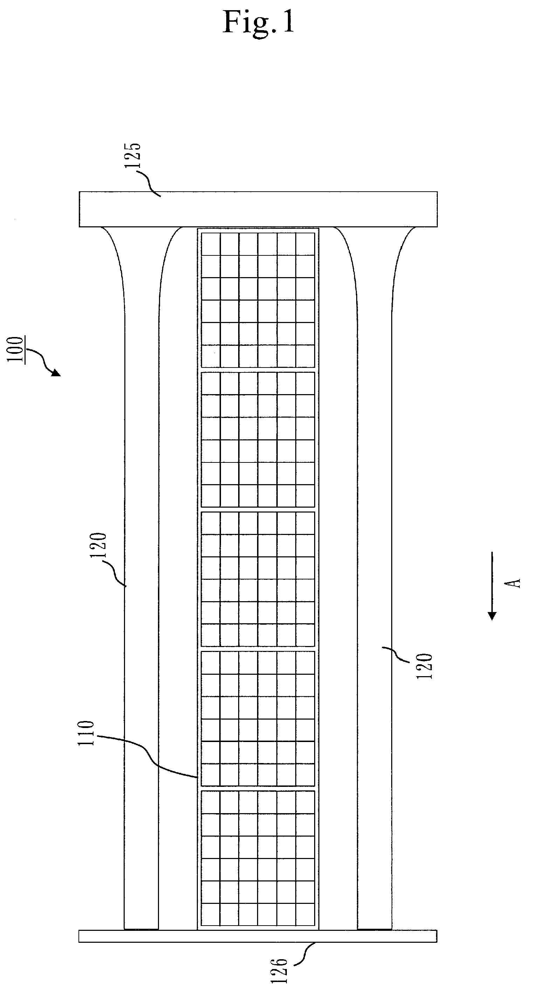

FIG. 1 illustrates a schematic diagram illustrating a specific example of a solar cell paddle 100 according to the present embodiment. The solar cell paddle 100 is used for artificial satellites, and is also called an artificial-satellite solar cell paddle. In FIG. 1, the solar cell paddle 100 in an extended state is illustrated. The extended state is a state in which the solar cell paddle 100 is deployed, and is also called a deployed state. In the extended state, an extensible boom 120 is extended.

The extensible boom 120 is made of a fiber-reinforced composite material, and is extended from a retracted state of being rolled in a cylindrical form along an extending direction A. The extending direction A is one of short directions of the cylindrical shape in the retracted state. When the extensible boom 120 is extended, the extensible boom 120 has a cylindrical shape with an axis parallel to the extending direction A as a center axis. Note that the extensible boom 120 may be made of a laminated material. The number of lamination layers of the laminated material has an upper limit of, preferably, three.

In order to keep a solar cell bracket 110 in a deployed state, the solar cell paddle 100 includes the extensible boom 120 and a beam 126. The solar cell bracket 110 is also called a flexible solar cell bracket.

In the solar cell paddle 100 in a retracted state, the extensible boom 120 and the flexible solar cell bracket 110 wind around a support structure portion 125. The retracted state is a state in which the solar cell paddle 100 is retracted. The solar cell paddle 100 in the retracted state is shorter than the solar cell paddle 100 in the extended state. In the retracted state, the extensible boom 120 is retracted by being rolled in a cylindrical form.

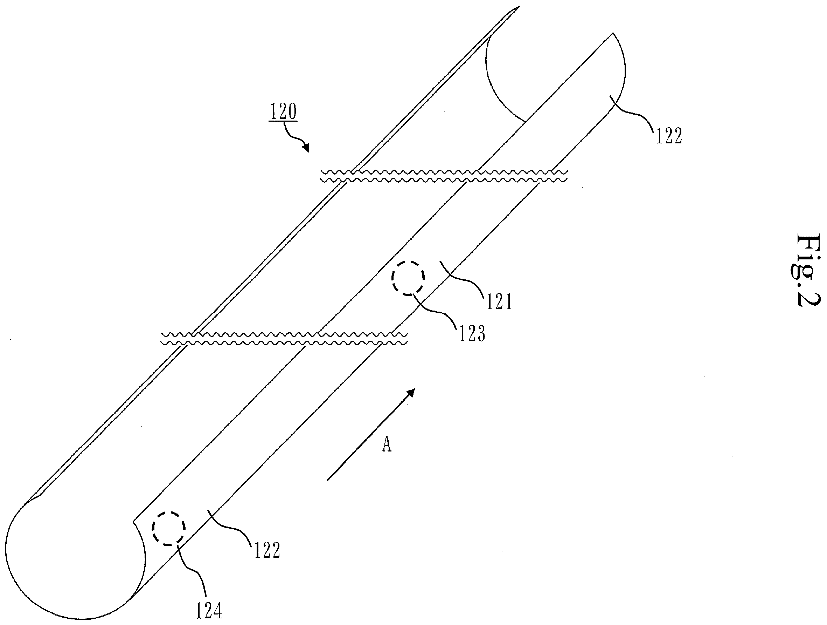

FIG. 2 illustrates an extended state of the extensible boom 120 singly. As illustrated in FIG. 2, the shape of a vertical section of the extensible boom 120 with respect to the extending direction A is a circular shape with a deficient portion.

The extensible boom 120 is made of carbon-fiber-reinforced plastic. On a plane of the extensible boom 120, there are fiber directions of two types on each section vertical to the extending direction A. However, on the plane of the extensible boom 120, the fiber directions of two types in one area and the fiber directions of two types in another area are not limited to be the same.

In a first area of the extensible boom 120, directions of fiber contained in the fiber-reinforced composite material are a first low-angle direction and a second low-angle direction. The first low-angle direction forms a negative angle to a clockwise direction with respect to the extending direction A. The second low-angle direction forms a positive angle to the clockwise direction with respect to the extending direction A.

Also, in a second area of the extensible boom 120, directions of fiber contained in the fiber-reinforced composite material are a first high-angle direction and a second high-angle direction. In the extended extensible boom 120, the position of the second area in the extending direction A is different from the position of the first area in the extending direction A. The first high-angle direction forms a negative angle to a clockwise direction with respect to the extending direction A.

The second high-angle direction forms a positive angle to the clockwise direction with respect to the extending direction A. Note that the first low-angle direction is closer to the extending direction A than the first high-angle direction, and the second low-angle direction is closer to the extending direction A than the second high-angle direction.

For each of the first area and the second area, each position on the extensible boom 120 is not particularly limited. The first area is, as a specific example, a center portion 121 of the extended extensible boom 120 in the extending direction A. The second area is, as a specific example, at least one end portion 122 of the extended extensible boom 120 in the extending direction A.

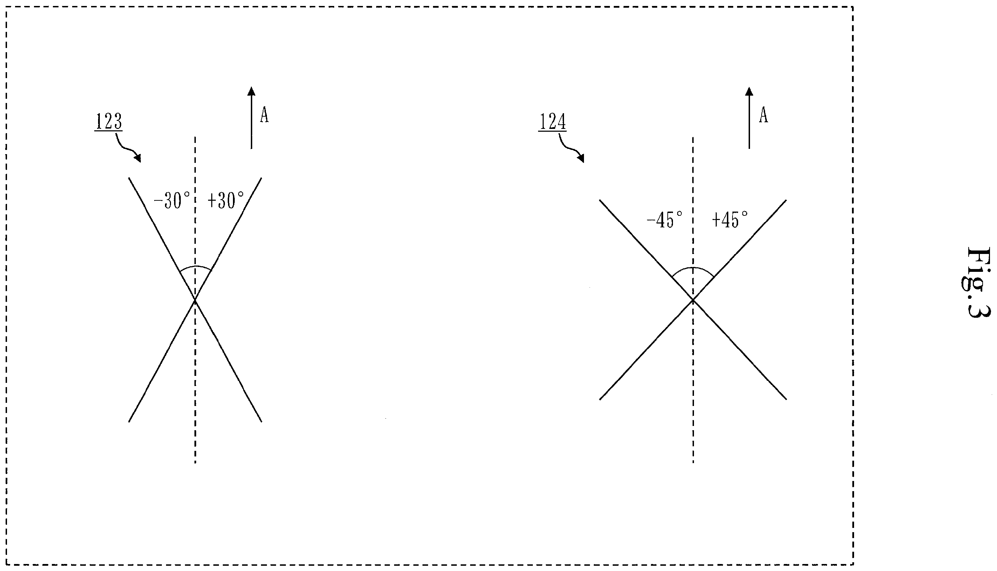

FIG. 3 illustrates each of a fiber orientation 123 and a fiber orientation 124.

The fiber orientation 123 includes fiber directions of two types on the plane of the extensible boom 120, and fiber directions of two types in the center portion 121 of the extensible boom 120. That is, when the extended extensible boom 120 is deployed, in the center portion 121 of the extensible boom 120 in the extending direction A, the directions of fiber contained in the fiber-reinforced composite material are the first low-angle direction and the second low-angle direction.

The center portion 121 is an area including a center portion of the extensible boom 120 in an extended state in the extending direction A and, typically, a portion of the extensible boom 120 other than the end portion 122. Angles of the fiber directions included in the fiber orientation 123 include two types, as a specific example, +30° and -30°. Here, each angle of the fiber direction is an angle with reference to the extending direction A.

The fiber orientation 124 includes fiber directions of two types on the plane of the extensible boom 120, and fiber directions of two types in at least one end portion 122. That is, when the extended extensible boom 120 is deployed, in at least one end portion 122 of the extensible boom 120 in the extending direction A, the directions of fiber contained in the fiber-reinforced composite material are the first high-angle direction and the second high-angle direction.

The end portion 122 is formed of one end and the other end of the extensible boom 120 in the extended state in the extending direction A. Angles of the fiber directions included in the fiber orientation 124 include two types, as a specific example, +45° and -45°.

An angle formed by the first low-angle direction to the clockwise direction with respect to the extending direction A is an angle larger than -45° and is larger than an angle formed by the first high-angle direction to the clockwise direction with respect to the extending direction A.

An angle formed by the second low-angle direction to the clockwise direction with respect to the extending direction A is an angle smaller than 45° and is smaller than an angle formed by the second high-angle direction to the clockwise direction with respect to the extending direction A. That is, each of the angle formed by the first low-angle direction and the extending direction A and the angle formed by the second low-angle direction and the extending direction A may be an angle smaller than 45°.

As a fiber-reinforced composite material to be used for the extensible boom 120, a plain-woven fabric is generally used and, in the fabric, the fiber directions of two types are orthogonal. That is, the fiber directions of two types are +45° and -45°.

Meanwhile, the inventors of the present application have found that it is possible to control the extending force and stability at the time of retraction by obtaining the extensible boom 120 with different fiber directions of two types in areas that are present at different positions of the extended extensible boom 120 in the extending direction A and, by utilizing controllability of the extending force and stability at the time of retraction, it is also possible to control other performances such as the weight of the extensible boom 120.

In the present invention, the fiber directions of two types in the center portion 121 are +30° and -30°. These fiber directions of two types are directions closer to the extending direction A compared with the fiber directions of +45° and -45°. Thus, with these fiber directions of two types, it is possible for the extensible boom 120 to obtain a relatively high extending force.

However, if the fiber directions of two types are set at +30° and -30° in the entire area on the plane of the extensible boom 120, stability in the retracted state decreases to degrade bidirectional stability, thereby causing, in some cases, the extensible boom 120 to be relatively easily deformed to become in an extended state in a situation in which the extensible boom 120 is not required to be deployed.

This situation is, as a specific example, one in the course of launching the solar cell paddle 100. Here, it is not preferable to provide a mechanism for assisting retraction of the extensible boom 120 in order to reduce deformation of the extensible boom 120 because of a massive scale of the mechanism, thereby causing an increase in weight of the solar cell paddle 100 and so forth.

Here, the inventors of the present application have found that a transition from a retracted state to an extended state starts from the end portion of the extensible boom 120 and the transition occurs in a chained manner toward the center of the extensible boom 120 and it is possible to suppress the transition by enhancing stability in the retracted state for only the end portion of the extensible boom 120, which is an area where the transition starts. Thus, in the present invention, the fiber directions of two types in the end portion 122 are set at +45° and -45°, which are equivalent to conventional ones, thereby achieving stability in the retracted state and a high extending force.

The length of the end portion required for obtaining stability of the extensible boom 120 in a retracted state changes depending on the size of the extensible boom 120. The length of the end portion is a length of the end portion 122 in the extending direction A when the extensible boom 120 is in an extended state.

Here, a radius of a shape equivalent to a circle on a vertical section of the extensible boom 120 with respect to the extending direction A is taken as R. When the length of the end portion is shorter than 1.5R, it is not possible to sufficiently ensure stability in a retracted state. Therefore, a lower limit of the length of the end portion is 1.5R. Note that a preferable lower limit of the length of the end portion is 2.0R.

Also, while it is not required to provide the length of the end portion with an upper limit for the purpose of obtaining stability in a retracted state, it is required to provide the length of the end portion with an upper limit for the extensible boom 120 to ensure a necessary extending force. Here, the length of the extensible boom 120 in an extended state in the extending direction A is taken as L. In order for the extensible boom 120 to ensure a necessary extending force, the length of the end portion is preferably equal to or smaller than 0.1L.

Therefore, as a specific example, consider a case in which R is 50 mm and L is 10 m in the extensible boom 120. In this case, the lower limit of the length of the end portion is 75 mm, and the upper limit of the length of the end portion is 1000 mm. Note that while the end portion 122 includes both end portions of the extensible boom 120 in order to more increase stability in a retracted state in the present embodiment, the end portion 122 may be one end portion of the extensible boom 120.

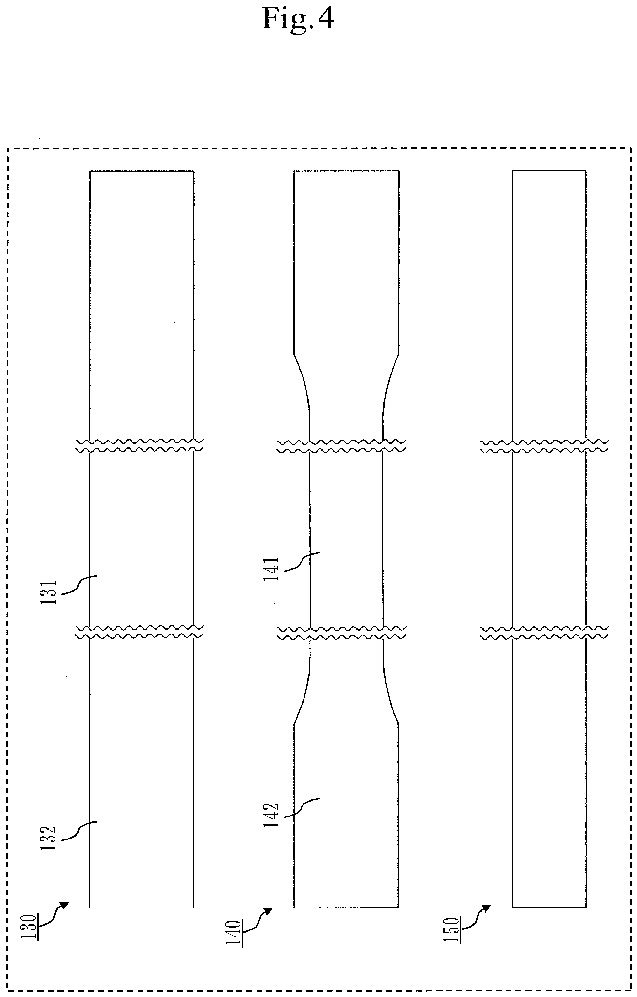

FIG. 4 illustrates each of a prepreg 130, a prepreg 140, and a prepreg 150.

The prepreg 130 is the material of the extensible boom 120, and is also called a woven prepreg or pre-deformation prepreg. The prepreg 130 is made of, as a specific example, plain-woven carbon fiber T300 manufactured by Toray Industries, Inc. and epoxy resin before curing. In the prepreg 130, the angle in the fiber direction with respect to a longitudinal direction, which corresponds to the extending direction A of the extensible boom 120, is +45° or -45°.

The prepreg 140 is obtained by deforming the prepreg 130 by stretching a center portion 131 in the extending direction A of the prepreg 130 along the extending direction A, and is also called a post-extension deformation prepreg.

The prepreg 150 is obtained by partially cutting the prepreg 140, and is also called a pre-forming prepreg. By forming the prepreg 150 by using a forming die to form the extensible boom 120, the extensible boom 120 is formed. That is, in an extensible boom manufacturing method, the stretched woven prepreg is formed into a cylindrical shape with an axis parallel to the extending direction A as a center axis.

The extensible boom manufacturing method, which is a method of manufacturing the extensible boom 120, is described below.

An end portion 132 of the prepreg 130 is fixed and a force is given to the prepreg 130 to its longitudinal direction, thereby deforming the center portion 131 without deforming the end portion 132. With this, the prepreg 140 is obtained. As a result, the angle of the fiber direction in a center portion 141 changes with the deformation of the center portion 131 to an angle smaller than 45° or larger than -45°.

Therefore, in an undeformed end portion 142, the angle of the fiber direction is still an original angle, that is, 45° or -45°. On the other hand, in the deformed center portion 141, the angle of the fiber direction changes to an angle closer to the extending direction A than 45° or -45°, that is, for example, 30° or -30°.

Here, by deforming the center portion 131 along the extending direction A, the angle closer to the extending direction A than 45° or -45° is obtained in the center portion 141 as an angle of the fiber direction with respect to the extending direction A. Note that the angle of the fiber direction may be set at an angle larger than 45° or smaller than -45° by deforming the prepreg 130 to a direction orthogonal to the extending direction A.

The shape of the vertical section of the extensible boom 120 with respect to the extending direction A may be an oval shape in place of a circle shape with a deficient portion. Also, the shape of the vertical section may be a shape obtained by combining a plurality of sectional shapes, such as a shape obtained by making two circular sections opposed to each other.

The prepreg 130 is made of a plurality of fibers along a first direction and a plurality of fibers along a second direction. Here, an angle formed by the first direction to a clockwise direction with respect to the extending direction A is a negative angle, and an angle formed by the second direction to the clockwise direction with respect to the extending direction A is a positive angle.

In the extensible boom 120 manufactured by the extensible boom manufacturing method, the angle formed by the first low-angle direction to the clockwise direction with respect to the extending direction A is an angle larger than -45° and is larger than the angle formed by the first direction to the clockwise direction with respect to the extending direction A. Also, in the extensible boom 120, the angle formed by the second low-angle direction to the clockwise direction with respect to the extending direction A is an angle smaller than 45° and is smaller than the angle formed by the second direction to the clockwise direction with respect to the extending direction A.

When the fiber arranged along the first direction and the fiber arranged along the second direction are identical, by making the first direction and the second direction symmetrical with respect to the extending direction A, it is possible to stabilize the extensible boom 120. However, if a physical change between warps and wefts is large due to an influence of the fabric weaving method, the fiber arranged along the first direction and the fiber arranged along the second direction are different, or the like, in order to provide a physical symmetric property, the first direction and the second direction may not be made symmetrical with respect to the extending direction A and the angle regarding at least one of the first direction and the second direction may be adjusted as appropriate in accordance with the physical property or the like.

In the end portion 122, when the angle of the fiber orientation 124 is an angle smaller than 40°, that is, when the angle of the fiber orientation 124 is -40° or more or +40° or less, stability of the extensible boom 120 in a retracted state conspicuously decreases. Thus, the lower limit of the angle of the fiber orientation 124 is 40°. That is, the angle of the fiber orientation 124 is +40° or more or -40° or less. Note that a preferable lower limit as a lower limit of the angle is 42°.

Also, if the angle of the fiber orientation 124 exceeds 75° in the end portion 122, the strength of the extensible boom 120 in the extending direction A decreases to cause a crack at the time of deformation of the extensible boom 120. Thus, the upper limit of the angle of the fiber orientation 124 is 75°. That is, the angle in the fiber direction the fiber orientation 124 has is +75° or less or -75° or more. Note that a preferable upper limit as an upper limit of the angle is 70°.

Therefore, the angle of the first high-angle direction to the clockwise direction with respect to the extending direction A is -75° or more and -40° or less. Also, the angle of the second high-angle direction to the clockwise direction with respect to the extending direction A is 40° or more and 75° or less.

That is, each of the angle formed by the first high-angle direction and the extending direction A and the angle formed by the second high-angle direction and the extending direction A is 40° or more and 75° or less.

In the center portion 121, when the angle of the fiber orientation 123 exceeds 40°, the extending force of the extensible boom 120 is equivalent to the extending force of the extensible boom 120 when the angle of the fiber orientation 123 is 45° as conventional. Thus, the upper limit of the angle of the fiber orientation 123 is 40°.

Also, when the angle of the fiber orientation 123 in the center portion 121 is smaller than 10°, the strength of the extensible boom 120 in an orthogonal direction with respect to the extending direction A conspicuously decreases. Thus, the lower limit of the angle of the fiber orientation 123 is 10°. Note that a preferable lower limit as a lower limit of the angle is 15°.

Therefore, the angle formed by the first low-angle direction to the clockwise direction with respect to the extending direction A is -40° or more and -10° or less. Also, the angle formed by the second low-angle direction to the clockwise direction with respect to the extending direction A is 10° or more and 40° or less. That is, each of the angle formed by the first low-angle direction and the extending direction A and the angle formed by the second low-angle direction and the extending direction A is 10° or more and 40° or less.

By using carbon-fiber-reinforced plastic as a material of the extensible boom 120, it is possible to obtain the extensible boom 120 that is relatively lightweight. Here, glass fiber, SiC fiber, or the like may be used as fiber configuring the material, in place of carbon fiber. In the material, as a fiber fabric, a twilled fabric, braid, or the like may be used in place of a plain-woven fabric. The resin configuring the material may be thermosetting resin such as cyanate resin and phenol resin, or may be thermoplastic resin. As a base material for retaining the fiber, a metal, ceramic, or the like may be used in place of resin.

Note that since the resin tends to be deformed as the viscosity is lower, the prepreg 130 may be deformed after the prepreg 130 is heated. Also, while the width of the prepreg 140 is made uniform by cutting after portions of the prepreg 130 other than its end portion are deformed in the above-described specific example, the prepreg 130 may be cut before the prepreg 130 is deformed and then the width-shortened prepreg 130 may be deformed.

### Description of effects of Embodiment 1

As above, according to the present embodiment, in the extensible boom 120 made of a fiber-reinforced composite material, the fiber orientation is controlled, thereby ensuring a relatively high extending force without an increase in weight, and making stability in a retracted state relatively high.

Also, the shape of a section of the extensible boom 120 in an extended state orthogonal to the extending direction A is a relatively simple shape. That is, the extensible boom 120 has a simple sectional shape that is excellent in formability. Therefore, according to the extensible boom 120 of the present embodiment, a crack less tends to occur at the time of forming and accuracy of the shape after forming can be maintained relatively high.

### Embodiment 2.

Points different from the above-described embodiment are mainly described below with reference to the drawing.

### Description of structure

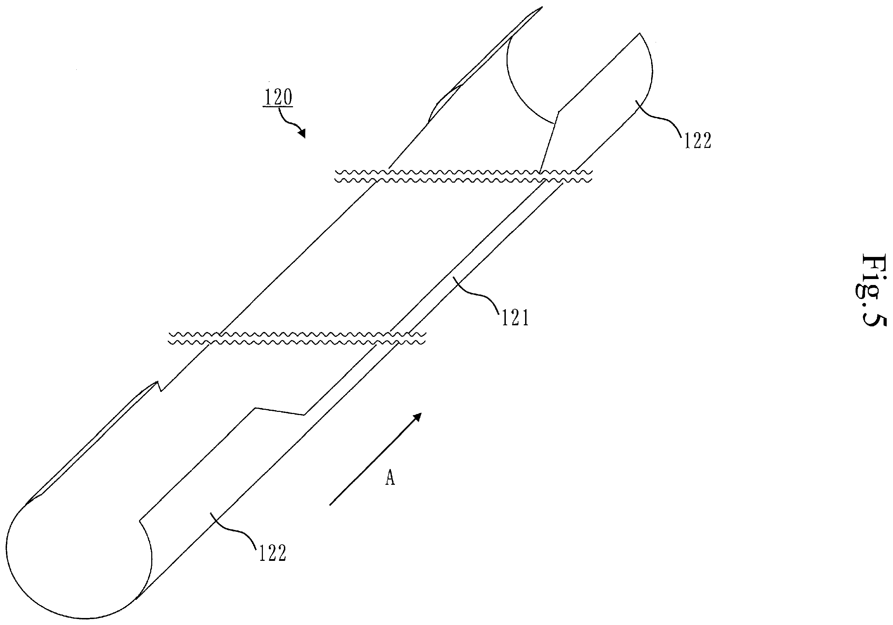

FIG. 5 illustrates a specific example of the extended state of the extensible boom 120 singly according to the present embodiment.

As with Embodiment 1, the angle of the fiber direction in the center portion 121 according to the present embodiment is +30° or -30°. By setting the angle of the fiber direction in the end portion 122 according to the present embodiment at +60° or -60°, stability in a retracted state improves.

In the extensible boom 120 in an extended state, the shape of any section orthogonal to the extending direction A is a circular section. However, the opening angle of a section orthogonal to the extending direction A in one area may be different from the opening angle of a section orthogonal to the extending direction A in another area. That is, the extensible boom 120 in the extended state has a shape having an opening continuously from one end to the other end of the extensible boom 120 along the extending direction A. The opening corresponds to part of an outer perimeter of the cylindrical shape and is an area where the fiber-reinforced composite material is not present. The opening is, as a specific example, a circular deficient portion. The size of the opening in at least one end portion 122 is smaller than the size of the opening in the center portion 121. The opening angle is an angle formed by both deficient ends the circular deficient portion has and the center of a circle corresponding to the circular deficient portion, and is a center angle of a fan shape formed on the section of the extensible boom 120 orthogonal to the extending direction A and corresponding to the circular deficient portion.

Here, while stability of the extensible boom 120 in a retracted state decreases as the opening angle is larger, the weight of the extensible boom 120 decreases simultaneously. The end portion 122 contributes to an improvement in stability in a retracted state, and contribution to the extending force is relatively small. Thus, by making the opening angle in the center portion 121 relatively large and making the opening angle in the end portion 122 relatively small, it is possible to reduce weight of the extensible boom 120 while stability in a retracted state is maintained.

As described above, the opening angle in the extensible boom 120 in an extended state is made large to reduce the weight of the extensible boom 120. Meanwhile, it is also possible to reduce the weight of the extensible boom 120 while the extending force is maintained by relatively decreasing the weight of resin in at least one end portion 122 by, for example, promoting bleeding of resin at the time of forming the extensible boom 120, that is, by making the percentage of fiber content of the fiber-reinforced composite material in at least one end portion 122 higher than the percentage of fiber content of the fiber-reinforced composite material in the center portion 121. Here, as a specific example, the percentage of carbon fiber content in the carbon-fiber-reinforced plastic is relatively made large in only the end portion 122.

### Description of effects of Embodiment 2

As above, according to the present embodiment, the opening angle in the end portion 122 is relatively small compared with the opening angle in the center portion 121 or the percentage of carbon fiber content in the end portion 122 is relatively large compared with the percentage of carbon fiber content in the center portion 121. Therefore, according to the present embodiment, the weight of the extensible boom 120 can be reduced while the extending force of the extensible boom 120 is maintained.

### Other embodiments

Further, embodiments are not limited to those illustrated as Embodiments 1 and 2, but various modifications are possible as necessary. The described procedures may be modified as appropriate. The scope of the invention is defined by the appended claims.

### List of Reference Signs

- 100:: solar cell paddle
- 110:: solar cell bracket
- 120:: extensible boom
- 121:: center portion
- 122:: end portion
- 123:: fiber orientation
- 124:: fiber orientation
- 125:: support structure portion
- 126:: beam
- 130:: prepreg
- 131:: center portion
- 132:: end portion
- 140:: prepreg
- 141:: center portion
- 142:: end portion
- 150:: prepreg
- A:: extending direction.

## Claims

1. An extensible boom (120) to be extended from a retracted state of being rolled in a cylindrical form, wherein
- the extensible boom (120) is made of a fiber-reinforced composite material,
- when the extended extensible boom (120) is deployed,
- in a first area, directions of fiber contained in the fiber-reinforced composite material are a first low-angle direction forming a negative angle to a clockwise direction with respect to an extending direction of the extensible boom (120) and a second low-angle direction forming a positive angle to the clockwise direction with respect to the extending direction,
- in a second area a position of which in the extending direction is different from a position of the first area in the extending direction, directions of fiber contained in the fiber-reinforced composite material are a first high-angle direction forming a negative angle to a clockwise direction with respect to the extending direction and a second high-angle direction forming a positive angle to the clockwise direction with respect to the extending direction,
- the first low-angle direction is closer to the extending direction than the first high-angle direction, and
- the second low-angle direction is closer to the extending direction than the second high-angle direction.

2. The extensible boom (120) according to claim 1,
wherein each of an angle formed by the first low-angle direction and the extending direction and an angle formed by the second low-angle direction and the extending direction is an angle smaller than 45°.

3. The extensible boom (120) according to claim 1 or 2,
wherein the first area is a center portion (121) of the extended extensible boom (120) in the extending direction, and
the second area is at least one end portion (122) of the extended extensible boom (120) in the extending direction.

4. The extensible boom (120) according to claim 3,
wherein an angle formed by the first low-angle direction and the extending direction and an angle formed by the second low-angle direction and the extending direction are each 10° or more and 40° or less.

5. The extensible boom (120) according to claim 3 or 4,
wherein an angle formed by the first high-angle direction and the extending direction and an angle formed by the second high-angle direction and the extending direction are each 40° or more and 75° or less.

6. The extensible boom (120) according to any one of claims 3 to 5,
wherein when the extensible boom (120) is extended, the extensible boom (120) has a cylindrical shape with an axis parallel to the extending direction as a center axis, the shape having an opening continuously from one end to another end of the extensible boom (120) along the extending direction,
- the opening corresponds to part of an outer perimeter of the cylindrical shape and is an area where the fiber-reinforced composite material is not present, and
- a size of the opening in the at least one end portion (122) is smaller than a size of the opening in the center portion (121).

7. The extensible boom (120) according to any one of claims 3 to 6,
wherein a percentage of fiber content of the fiber-reinforced composite material in the at least one end portion (122) is higher than a percentage of fiber content of the fiber-reinforced composite material in the center potion.

8. A solar cell paddle (100) for use in an artificial satellite, the solar cell paddle (100) comprising:
the extensible boom (120) according to any one of claims 1 to 7.

9. A manufacturing method for the extensible boom (120) according to any one of claims 1 to 7, the manufacturing method comprising:
- stretching a center portion (121) in an extending direction of a woven prepreg along the extending direction, the woven prepreg being made of a plurality of fibers; and
- forming the stretched woven prepreg into a cylindrical shape with an axis parallel to the extending direction as a center axis, wherein
- when the extended extensible boom (120) is deployed,
- in a first area, directions of fiber contained in the fiber-reinforced composite material are a first low-angle direction forming a negative angle to a clockwise direction with respect to an extending direction of the extensible boom (120) and a second low-angle direction forming a positive angle to the clockwise direction with respect to the extending direction,
- in a second area a position of which in the extending direction is different from a position of the first area in the extending direction, directions of fiber contained in the fiber-reinforced composite material are a first high-angle direction forming a negative angle to a clockwise direction with respect to the extending direction and a second high-angle direction forming a positive angle to the clockwise direction with respect to the extending direction,
- the angle formed by the first low-angle direction to the clockwise direction with respect to the extending direction is an angle larger than -45° and is larger than the angle formed by the first high-angle direction to the clockwise direction with respect to the extending direction, the first low-angle direction being a direction along which the fiber arranged in the center portion (121) of the stretched woven prepreg goes, and
- the angle formed by the second low-angle direction to the clockwise direction with respect to the extending direction is an angle smaller than 45° and is smaller than the angle formed by the second high-angle direction to the clockwise direction with respect to the extending direction, the second low-angle direction being a direction along which the fiber arranged in the center portion (121) of the stretched woven prepreg goes.

## Patentansprüche

1. Ausfahrbarer Ausleger (120), der aus einem eingefahrenen Zustand, in dem er in einer zylindrischen Form aufgerollt ist, ausfahrbar ist, wobei
- der ausfahrbare Ausleger (120) aus einem faserverstärkten Verbundmaterial hergestellt ist,
- wenn der ausgefahrene ausfahrbare Ausleger (120) eingesetzt wird,
- in einem ersten Bereich Richtungen von Fasern, die in dem faserverstärkten Verbundmaterial enthalten sind, die folgenden sind:
- eine erste Richtung mit kleinem Winkel, die einen negativen Winkel zu einer Uhrzeigerrichtung in Bezug auf eine Ausfahrrichtung des ausfahrbaren Auslegers (120) bildet, und
- eine zweite Richtung mit kleinem Winkel, die einen positiven Winkel zu der Uhrzeigerrichtung in Bezug auf die Ausfahrrichtung bildet,
- in einem zweiten Bereich, dessen Position in der Ausfahrrichtung sich von einer Position des ersten Bereichs in der Ausfahrrichtung unterscheidet, Richtungen der Fasern, die in dem faserverstärkten Verbundmaterial enthalten sind, die folgenden sind:
- eine erste Richtung mit großem Winkel, die einen negativen Winkel zu einer Uhrzeigerrichtung in Bezug auf die Ausfahrrichtung bildet, und
- eine zweite Richtung mit großem Winkel, die einen positiven Winkel zu der Uhrzeigerrichtung in Bezug auf die Ausfahrrichtung bildet,
- die erste Richtung mit kleinem Winkel näher an der Ausfahrrichtung liegt als die erste Richtung mit großem Winkel, und
- die zweite Richtung mit kleinem Winkel näher an der Ausfahrrichtung liegt als die zweite Richtung mit großem Winkel.

2. Ausfahrbarer Ausleger (120) nach Anspruch 1,
wobei sowohl ein Winkel, der durch die erste Richtung mit kleinem Winkel und die Ausfahrrichtung gebildet ist, als auch der Winkel, der durch die zweite Richtung mit kleinem Winkel und die Ausfahrrichtung gebildet ist, kleiner als 45° ist.

3. Ausfahrbarer Ausleger (120) nach Anspruch 1 oder 2,
wobei der erste Bereich ein mittlerer Bereich (121) des ausgefahrenen ausfahrbaren Auslegers (120) in der Ausfahrrichtung ist und
der zweite Bereich zumindest ein Endbereich (122) des ausgefahrenen ausfahrbaren Auslegers (120) in der Ausfahrrichtung ist.

4. Ausfahrbarer Ausleger (120) nach Anspruch 3,
wobei ein Winkel, der durch die erste Richtung mit kleinem Winkel und die Ausfahrrichtung gebildet ist, und ein Winkel, der durch die zweite Richtung mit kleinem Winkel und die Ausfahrrichtung gebildet ist, jeweils 10° oder mehr und 40° oder weniger betragen.

5. Ausfahrbarer Ausleger (120) nach Anspruch 3 oder 4,
wobei ein Winkel, der durch die erste Richtung mit großem Winkel und die Ausfahrrichtung gebildet ist, und ein Winkel, der durch die zweite Richtung mit großem Winkel und die Ausfahrrichtung gebildet ist, jeweils 40° oder mehr und 75° oder weniger betragen.

6. Ausfahrbarer Ausleger (120) nach einem der Ansprüche 3 bis 5,
wobei, wenn der ausfahrbare Ausleger (120) ausgefahren ist, der ausfahrbare Ausleger (120) eine zylindrische Form mit einer Achse parallel zu der Ausfahrrichtung als eine Mittelachse aufweist, wobei die Form eine Öffnung aufweist, die sich kontinuierlich entlang der Ausfahrrichtung von einem Ende zu einem anderen Ende des ausfahrbaren Auslegers (120) erstreckt,
- die Öffnung mit einem Teil eines Außenumfangs der zylindrischen Form korrespondiert und ein Bereich ist, in dem das faserverstärkte Verbundmaterial nicht vorhanden ist, und
- eine Größe der Öffnung in dem zumindest einen Endbereich (122) kleiner ist als eine Größe der Öffnung in dem mittleren Bereich (121).

7. Ausfahrbarer Ausleger (120) nach einem der Ansprüche 3 bis 6,
wobei ein prozentualer Anteil eines Fasergehalts des faserverstärkten Verbundmaterials in dem zumindest einen Endbereich (122) höher ist als ein prozentualer Anteil eines Fasergehalts des faserverstärkten Verbundmaterials in dem mittleren Bereich.

8. Solarzellen-Paddel (100) zur Verwendung in einem künstlichen Satelliten, wobei das Solarzellen-Paddel (100) den ausfahrbaren Ausleger (120) nach einem der Ansprüche 1 bis 7 aufweist.

9. Verfahren zum Herstellen des ausfahrbaren Auslegers (120) nach einem der Ansprüche 1 bis 7,
wobei das Verfahren zum Herstellen die folgenden Schritte umfasst:
- Strecken eines in einer Ausfahrrichtung mittleren Bereichs (121) eines gewebten Prepregs entlang der Ausfahrrichtung, wobei das gewebte Prepreg aus einer Vielzahl von Fasern gebildet ist; und
- Formen des gestreckten gewebten Prepregs zu einer zylindrischen Form mit einer Achse parallel zu der Ausfahrrichtung als eine Mittelachse, wobei
- wenn der ausgefahrene ausfahrbare Ausleger (120) eingesetzt wird,
- in einem ersten Bereich Richtungen von Fasern, die in dem faserverstärkten Verbundmaterial enthalten sind, die folgenden sind:
- eine erste Richtung mit kleinem Winkel, die einen negativen Winkel zu einer Uhrzeigerrichtung in Bezug auf eine Ausfahrrichtung des ausfahrbaren Auslegers (120) bildet, und
- eine zweite Richtung mit kleinem Winkel, die einen positiven Winkel zu der Uhrzeigerrichtung in Bezug auf die Ausfahrrichtung bildet,
- in einem zweiten Bereich, dessen Position in der Ausfahrrichtung sich von einer Position des ersten Bereichs in der Ausfahrrichtung unterscheidet, Richtungen der Fasern, die in dem faserverstärkten Verbundmaterial enthalten sind, die folgenden sind:
- eine erste Richtung mit großem Winkel, die einen negativen Winkel zu einer Uhrzeigerrichtung in Bezug auf die Ausfahrrichtung bildet, und
- eine zweite Richtung mit großem Winkel, die einen positiven Winkel zu der Uhrzeigerrichtung in Bezug auf die Ausfahrrichtung bildet,
- der Winkel, der durch die erste Richtung mit kleinem Winkel zu der Uhrzeigerrichtung in Bezug auf die Ausfahrrichtung gebildet ist, ein Winkel ist, der größer als -45° ist und größer ist als der Winkel, der durch die erste Richtung mit großem Winkel zu der Uhrzeigerrichtung in Bezug auf die Ausfahrrichtung gebildet ist, wobei die erste Richtung mit kleinem Winkel eine Richtung ist, entlang der die Fasern verlaufen, die in dem mittleren Bereich (121) des gestreckten gewebten Prepregs angeordnet sind,
- der Winkel, der durch die zweite Richtung mit kleinem Winkel zu der Uhrzeigerrichtung in Bezug auf die Ausfahrrichtung gebildet ist, ein Winkel ist, der kleiner als 45° ist und kleiner ist als der Winkel, der durch die zweite Richtung mit großem Winkel zu der Uhrzeigerrichtung in Bezug auf die Ausfahrrichtung gebildet ist, wobei die zweite Richtung mit kleinem Winkel eine Richtung ist, entlang der die Fasern verlaufen, die in dem mittleren Bereich (121) des gestreckten gewebten Prepregs angeordnet sind.

## Revendications

1. Flèche extensible (120) à mettre en extension depuis un état rétracté où elle est enroulée dans une forme cylindrique, dans laquelle
- la flèche extensible (120) est faite à partir d'un matériau composite renforcé par fibre,
- dans laquelle la flèche extensible (120) mise en extension est déployée,
- dans une première zone, des directions d'une fibre contenue dans le matériau composite renforcé par fibre sont une première direction à faible angle formant un angle négatif dans une direction dans le sens des aiguilles d'une montre par rapport à une direction d'extension de la flèche extensible (120) et une deuxième direction à faible angle formant un angle positif dans la direction dans le sens des aiguilles d'une montre par rapport à la direction d'extension,
- dans une deuxième zone dont une position dans la direction d'extension est différente d'une position de la première zone dans la direction d'extension, des directions d'une fibre contenue dans le matériau composite renforcé par fibre sont une première direction à angle élevé formant un angle négatif dans une direction dans le sens des aiguilles d'une montre par rapport à la direction d'extension et une deuxième direction à angle élevé formant un angle positif dans la direction dans le sens des aiguilles d'une montre par rapport à la direction d'extension,
- la première direction à faible angle est plus proche de la direction d'extension que la première direction à angle élevé, et
- la deuxième direction à faible angle est plus proche de la direction d'extension que la deuxième direction à angle élevé.

2. Flèche extensible (120) selon la revendication 1,
dans laquelle chacun d'un angle formé par la première direction à faible angle et la direction d'extension et d'un angle formé par la deuxième direction à faible angle et la direction d'extension est un angle inférieur à 45°.

3. Flèche extensible (120) selon la revendication 1 ou 2,
dans laquelle la première zone est une position centrale (121) de la flèche extensible (120) mise en extension dans la direction d'extension, et
la deuxième zone est au moins une portion d'extrémité (122) de la flèche extensible (120) mise en extension dans la direction d'extension.

4. Flèche extensible (120) selon la revendication 3,
dans laquelle un angle formé par la première direction à faible angle et la direction d'extension et un angle formé par la deuxième direction à faible angle et la direction d'extension sont chacun de 10° ou plus et de 40° ou moins.

5. Flèche extensible (120) selon la revendication 3 ou 4,
dans laquelle un angle formé par la première direction à angle élevé et la direction d'extension et un angle formé par la deuxième direction à angle élevé et la direction d'extension sont chacun de 40° ou plus et de 75° ou moins.

6. Flèche extensible (120) selon l'une quelconque des revendications 3 à 5, dans laquelle, quand la flèche extensible (120) est mise en extension, la flèche extensible (120) a une forme cylindrique avec un axe parallèle à la direction extension à titre d'axe central, la forme ayant une ouverture en continu depuis une extrémité jusqu'à une autre extrémité de la flèche extensible (120) le long de la direction d'extension,
- l'ouverture correspond à une partie d'un périmètre extérieur de la forme cylindrique et est une zone où le matériau composite renforcé par fibre n'est pas présent, et
- une taille de l'ouverture dans ladite au moins une portion d'extrémité (122) est inférieure à une taille de l'ouverture dans la portion centrale (121).

7. Flèche extensible (120) selon l'une quelconque des revendications 3 à 6, dans laquelle un pourcentage de teneur en fibre du matériau composite renforcé par fibre dans ladite au moins une portion d'extrémité (122) est supérieur à un pourcentage de teneur en fibre du matériau composite renforcé par fibre dans la portion centrale.

8. Panneau à cellules solaires (100) destiné à être utilisé dans un satellite artificiel, le panneau à cellules solaires (100) comprenant :
la flèche extensible (120) selon l'une quelconque des revendications 1 à 7.

9. Procédé de fabrication de la flèche extensible (120) selon l'une quelconque des revendications 1 à 7,
le procédé de fabrication comprenant les étapes consistant à :
- étirer une portion centrale (121) dans une direction d'extension d'un préimprégné tissé le long de la direction d'extension, le préimprégné tissé étant fait d'une pluralité de fibres ; et
- former le préimprégné tissé étiré pour lui donner une forme cylindrique avec un axe parallèle à la direction d'extension à titre d'axe central, dans lequel
- quand la flèche extensible (120) mise en extension est déployée,
- dans une première zone, des directions d'une fibre contenue dans le matériau composite renforcé par fibre sont une première direction à faible angle formant un angle négatif dans une direction dans le sens des aiguilles d'une montre par rapport à une direction d'extension de la flèche extensible (120) et une deuxième direction à faible angle formant un angle positif dans la direction dans le sens des aiguilles d'une montre par rapport à la direction d'extension,
- dans une deuxième zone dont une position dans la direction d'extension est différente d'une position de la première zone dans la direction d'extension, des directions d'une fibre contenue dans le matériau composite renforcé par fibre sont une première direction à angle élevé formant un angle négatif dans une direction dans le sens des aiguilles d'une montre par rapport à la direction d'extension et une deuxième direction à angle élevé formant un angle positif dans la direction dans le sens des aiguilles d'une montre par rapport à la direction d'extension,
- l'angle formé par la direction à faible angle dans la direction dans le sens des aiguilles d'une montre par rapport à la direction d'extension est un angle supérieur à -45° et est supérieur à l'angle formé par la première direction à angle élevé dans la direction dans le sens des aiguilles d'une montre par rapport à la direction d'extension, la première direction à faible angle étant une direction le long de laquelle s'étend la fibre agencée dans la portion centrale (121) du préimprégné tissé étiré, et
- l'angle formé par la deuxième direction à faible angle dans la direction dans le sens des aiguilles d'une montre par rapport à la direction d'extension est un angle inférieur à 45° et est inférieur à l'angle formé par la deuxième direction à angle élevé dans la direction dans le sens des aiguilles d'une montre par rapport à la direction d'extension, la deuxième direction à faible angle étant une direction le long de laquelle s'étend la fibre agencée dans la portion centrale (121) du préimprégné tissé étiré.
